(19) **Europäisches Patentamt / European Patent Office / Office européen des brevets**

(11) **EP 1 717 560 B1**

(12) **EUROPÄISCHE PATENTSCHRIFT**

(45) Veröffentlichungstag und Bekanntmachung des Hinweises auf die Patenterteilung:
**14.11.2018 Patentblatt 2018/46**

(51) Int Cl.:
**G01D 5/14** (2006.01)　　**G01D 21/02** (2006.01)

(21) Anmeldenummer: **06008062.9**

(22) Anmeldetag: **19.04.2006**

(54) **Sensornetzwerk**

Sensor network

Réseau de détection

(84) Benannte Vertragsstaaten:
**DE**

(30) Priorität: **29.04.2005　DE 102005020028**

(43) Veröffentlichungstag der Anmeldung:
**02.11.2006　Patentblatt 2006/44**

(73) Patentinhaber: **Leuze electronic GmbH + Co. KG**
**73277 Owen/Teck (DE)**

(72) Erfinder: **Argast, Martin**
**72584 Hülben (DE)**

(74) Vertreter: **Ruckh, Rainer Gerhard**
**Patentanwalt**
**Jurastrasse 1**
**73087 Bad Boll (DE)**

(56) Entgegenhaltungen:
**EP-A1- 1 398 729　　WO-A2-03/015452**

- **DELIN K A ET AL: "The Sensor Web: A New Instrument Concept", INTERNET CITATION, 20. Januar 2001 (2001-01-20), Seiten 1-9, XP002631442, Gefunden im Internet: URL:http://www.sensorwaresystems.com/historical/resources/sensorweb-concept.pdf [gefunden am 2011-04-05]**

EP 1 717 560 B1

**Beschreibung**

Die Erfindung betrifft ein Sensornetzwerk.

Sensornetzwerke sind in Form von Mehrfachanordnungen von Sensoren zur Überwachung komplexer Anlagen, wie Maschinen, Fördersystemen und dergleichen, bekannt. Mit den einzelnen Sensoren erfolgt jeweils eine Objektdetektion um unterschiedliche Überwachungsfunktionen ausführen zu können. Die einzelnen Sensoren geben die Messergebnisse der Objektdetektionen in eine übergeordnete Steuerung. Nachteilig hierbei ist, dass die Sensoren ihre Messergebnisse mit hohen Übertragungsraten in die Messung eingeben, so dass dort in kurzer Zeit hohe Datenmengen verarbeitet werden müssen. Ein weiteres Problem besteht darin, dass zur Erfüllung der Überwachungsfunktionen an die einzelnen Sensoren hohe Anforderungen bezüglich deren Detektionssicherheit und Störfestigkeit zu stellen sind. Dies führt dazu, dass die Sensoren unerwünscht teuer sind. Insbesondere ist nachteilig, dass bei einem Ausfall des Sensors die von ihm durchzuführende Überwachungsfunktion nicht mehr durchgeführt wird. Derartige Ausfälle von Sensoren können dann zu Stillständen und Ausfällen von Anlagen und Maschinen führen, die mit diesen Sensoren überwacht werden.

Die EP 1 398 729 A1 betrifft ein Detektionssystem und Detektionsverfahren zur Detektion und Verfolgung von optischen Codes an Objekten, die entlang eines Überwachungsbereichs transportiert werden, mit mehreren optoelektronischen Sensoren zum Einlesen der Codes und zum Erzeugen entsprechender Lesedaten, und mit zumindest zwei Datenbussen, denen jeweils eine eigene Bussteuereinheit zugeordnet ist, wobei jeder der mehreren Sensoren sowohl an den einen als auch an den anderen der beiden Datenbusse angeschlossen ist, und wobei der eine der beiden Datenbusse mit der zugeordneten Bussteuereinheit einerseits und der andere Datenbus mit der zugeordneten Bussteuereinheit andererseits unterteilt sind in einen Primärzweig und einen Sekundärzweig, der dem Primärzweig untergeordnet ist.

In DELIN K A ET AL: "The Sensor Web: A New Instrument Concept", INTER-NET CITATION, 20. Januar 2001 (2001-01-20), Seiten 1-9, XP002631442, ist ein Sensornetzwerk beschrieben. Dies kann insbesondere derart ausgebildet sein, dass von Sensorknoten jeweils an einen zentralen Rechnerknoten Daten gesendet werden, die dann am Rechnerknoten angezeigt werden.

Die WO 03/015452 A2 betrifft ein Netzwerk von Sensoren, die in Gruppen zusammengefasst sind. Jeder Gruppe ist ein Kommando-Knoten in Form eines Prozessors zugeordnet. In diesem Kommando-Knoten erfolgt die Auswertung der Sensorsignale.

Der Erfindung liegt die Aufgabe zugrunde, ein flexibel arbeitendes Sensornetzwerk mit hoher Leistungsfähigkeit und Funktionalität bereitzustellen.

Zur Lösung dieser Aufgabe sind die Merkmale des Anspruchs 1 vorgegeben. Vorteilhafte Ausführungsformen und zweckmäßige Weiterbildungen der Erfindung sind in den Unteransprüchen beschrieben.

Die Erfindung betrifft ein Netzwerk von über einen Datenbus verbundenen Sensoren zur Detektion von Objekten. In den einzelnen Sensoren generierte Daten werden über den Datenbus an die weiteren Sensoren übertragen. In einem der Sensoren wird aus den Daten der einzelnen Sensoren ein Gesamtergebnis generiert, welches an eine übergeordnete Einheit ausgebbar ist.

Der Grundgedanke der Erfindung besteht darin, dass bei dem Netzwerk eine Arbeitsteilung derart durchgeführt wird, dass die einzelnen Sensoren spezifische Teilaufgaben erfüllen um Einzelergebnisse zu liefern, die dann in einem der Sensoren zu einem Gesamtergebnis verknüpft werden. Dies bedeutet, dass die Sensoren nicht mehr voneinander isolierte Überwachungsfunktionen erfüllen, sondern untereinander Daten in Form von Messergebnissen oder Parametern austauschen, um eine verbesserte Detektionssicherheit zu erzielen oder die Effizienz der Funktionsweisen der Sensoren innerhalb des Netzwerks zu verbessern.

Ein wesentlicher Aspekt des erfindungsgemäßen Netzwerks besteht darin, die Sensoren zur Generierung von Einzeldetektionsergebnissen zu nutzen, aus welchen dann in einem der Sensoren ein Gesamtergebnis abgeleitet wird. Das Gesamtergebnis ist dabei vorteilhaft so ausgebildet, dass dieses eine höhere Messgenauigkeit und generell eine höhere Detektionssicherheit bietet als die Einzelergebnisse der Sensoren.

Dies bedeutet umgekehrt, dass an die einzelnen Sensoren geringe Anforderungen an die Detektionssicherheit, insbesondere Messgenauigkeit und Störfestigkeit, gestellt werden können und dennoch durch die erfindungsgemäße Generierung von Gesamtdetektionsergebnissen aus den Einzeldetektionsergebnissen eine hohe Detektionssicherheit erzielt wird. Damit können die einzelnen Sensoren im Netzwerk einen sehr einfachen und kostengünstigen Aufbau aufweisen, was auch die Kosten des gesamten Netzwerks senkt.

Die verbesserten Gesamtdetektionsergebnisse, die in einem Sensor generiert werden, können insbesondere durch geeignete Verknüpfungen von Einzeldetektionsergebnissen der einzelnen Sensoren, im einfachsten Fall von Mittelwertbildungen, bewirkt werden. Generell ist es hierbei auch möglich, durch Verknüpfung einfacher Einzelergebnisse zu einem komplexen Gesamtergebnis zu kommen. Generell können die in einem Sensor generierten Gesamtdetektionsergebnisse auch dadurch verbessert werden, dass die Sensoren im Netzwerk ihre aktuellen Einstellungen definierenden Parameter und Messergebnisse, insbesondere auch statistische Verteilungen von Messwerten austauschen. Anhand der so übertragenen Daten kann in dem Sensor, der das Gesamtergebnis generiert, entschieden werden, welche und wie viele Sensoren des Netzwerks zu diesem Gesamtergebnis beitragen. Generell kann durch den Datenaustausch über das Netzwerk eine Optimierung der Parameter der einzelnen Sensoren erfolgen, um auf diese Weise das Gesamtdetektionsergebnis zu verbessern.

Schließlich können durch diesen Datenaustausch externe und interne Störungen aufgedeckt und durch geeignete Auswahl der Sensoren oder deren Parametrierung reduziert oder behoben werden.

Generell kann in einem der Sensoren, insbesondere in dem Sensor, in welchem das Gesamtdetektionsergebnis generiert wird, als weiteres Gesamtergebnis eine Auswahl getroffen werden, weche Sensoren zu vorgegebenen Zeitpunkten zum Gesamtdetektionsergebnis beitragen. Ein wichtiges Beispiel hierfür ist eine Ausfallkontrolle. Hierbei wird in einem Sensor der Ausfall eines anderen Sensors registriert. In Abhängigkeit davon kann der erste Sensor entscheiden, welche weiteren Sensoren die Aufgaben des ausgefallenen Sensors mit übernehmen um das Gesamtdetektionsergebnis zu generieren.

In einer weiteren Ausgestaltung kann bei einem Ausfall eines Sensors dieser durch einen neuen Sensor ersetzt werden. In diesem Fall kann der neue Sensor automatisch dadurch als Gesamtergebnis in das Netzwerk integriert werden, in dem dieser von wenigstens einem weiteren Sensor des Netzwerks die aktuellen Parameter übernimmt und diese rechtzeitig zur Optimierung seiner Funktion innerhalb des Netzwerks anpasst. Zur Optimierung seiner Parameter kann der neue Sensor hierzu fortlaufend Daten, insbesondere auch Messdaten, von den anderen Sensoren des Netzwerks einlesen. Generell kann auf diese Weise nicht nur ein defekter Sensor durch einen neuen Sensor ersetzt werden. Vielmehr können auf diese Weise jederzeit auch neue Sensoren in das Netzwerk integriert werden.

In einer weiteren Ausgestaltung können selektiv einzelne Sensoren in Abhängigkeit von den Signalen anderer Sensoren aktiviert werden. Beispielsweise bei einer Reihenanordnung von Sensoren, die nacheinander an diesen vorbeilaufenden Objekten detektieren, kann in Abhängigkeit des Einzeldetektionsergebnisses eines Sensors jeweils der darauf folgende Sensor der Reihenanordnung aktiviert werden. Dies führt zu einer erheblichen Energieeinsparung beim Betrieb des Netzwerks.

Ein weiterer wesentlicher Vorteil des erfindungsgemäßen Netzwerks besteht darin, dass mit den Sensoren im Netzwerk durch die Auswertung von Einzelergebnissen, die zur Gewinnung des Gesamtergebnisses führen, auf der Ebene der Sensoren eine Vorverarbeitung von Daten erfolgt, durch welche die übergerodnete Einheit, wie zum Beispiel eine Steuerung, entlastet werden kann. Dabei kann insbesondere auf der Ebene der Sensoren ein Datenaustausch mit einer Taktrate erfolgten, die erheblich größer ist als die Taktrate, mit welcher ein Sensor das Gesamtergebnis an die übergeordnete Einheit übermittelt.

Die Kommunikation der Sensoren über den Datenbus kann insbesondere leitungsgebunden erfolgen, wobei der Datenbus hierzu geeignete Schnittstellen, insbesondere serielle Schnittstellen aufweisen kann. Alternativ kann der Datenaustausch über den Datenbus auch bcrührungslos erfolgen, insbesondere durch die Übertragung von Funksignalen.

In dem erfindungsgemäßen Netzwerk können gleichartige aber auch verschiedenartige Sensoren integriert werden. Ebenso können die Funktionsprinzipien der Sensoren verschiedenartig sein.

Die Erfindung wird im Nachstehenden anhand der Zeichnungen erläutert. Es zeigen:

Figur 1: Erstes Ausführungsbeispiel eines Sensornetzwerks

Figur 2: Zweites Ausführungsbeispiel eines Sensornetzwerks

Figur 3: Zeitdiagramme der Signalgenerierung und Aktivierung der Sensoren des Netzwerks gemäß Figur 2

Figur 4: Abgewandelte Darstellung der Anordnung gemäß Figur 2

Figur 5: Zeitdiagramme für einen ersten Betriebsmodus der Anordnung gemäß Figur 4

Figur 6: Zeitdiagramme für einen zweiten Betriebsmodus der Anordnung gemäß Figur 4

Figur 7: Zeitdiagramme für einen dritten Betriebsmodus der Anordnung gemäß Figur 4

Figur 8: Drittes Ausführungsbeispiel eines Sensornetzwerks

Figur 9: Viertes Ausführungsbeispiel eines Sensornetzwerks

Figur 10: Fünftes Ausführungsbeispiel eines Sensornetzwerks

Figur 11: Sechstes Ausführungsbeispiel eines Sensornetzwerks

Figur 12: Spezielle Realisierung der Ausführungsform gemäß Figur 11

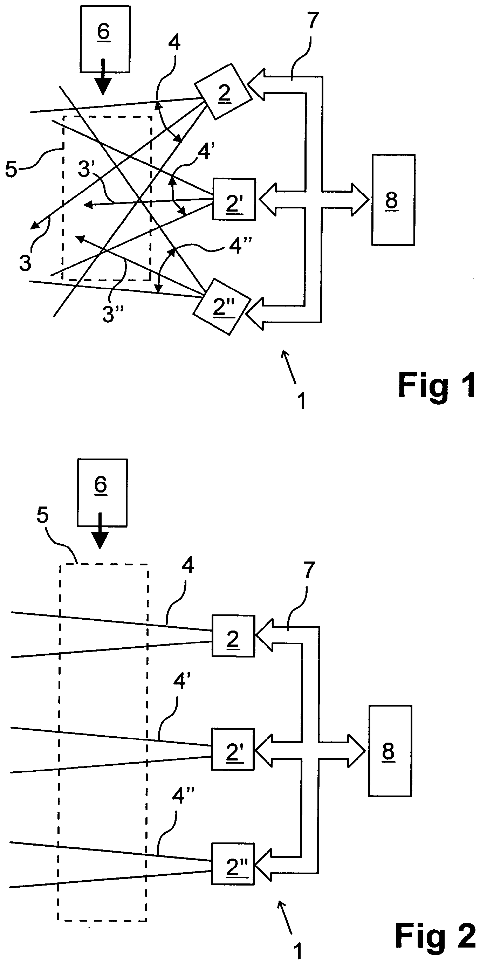

Figur 1 zeigt ein erstes Ausführungsbeispiel eines Netzwerks 1 mit einer Anordnung von Sensoren 2, 2', 2". Die Sensoren 2, 2', 2" im vorliegenden und in sämtlichen folgenden Ausführungsbeispielen sind als optische Sensoren ausgebildet. Jeder der Sensoren 2, 2', 2" umfasst zur Objekterkennung einen Sendelichtstrahlen 3, 3', 3" emittierenden Sender und einen Empfänger zum Empfang dieser Sendelichtstrahlen 3, 3', 3", welche in Figur 1 nicht gesondert dargestellt sind. Weiterhin umfasst jeder Sensor 2, 2', 2" eine ebenfalls nicht dargestellte Auswerteeinheit zur Steuerung des Senders und zur Auswertung der Empfangssignale an den Ausgängen des Empfängers. Mit den von den Sensoren 2, 2', 2" emittierten Sendelichtstrahlen 3, 3', 3" wird jeweils ein Sichtbereich 4, 4', 4" erfasst, in welchem eine Objektdetektion möglich ist. Zur Überdeckung des Sichtbereichs 4, 4', 4" kann der jeweilige Sensor eine Ablenkeinheit aufweisen, mittels derer die Sendelichtstrahlen 3, 3', 3" periodisch abgelenkt werden. Alternativ können die Sendelichtstrahlen 3, 3', 3" durch geeignete Optikelemente so aufgeweitet werden, dass diese den gesamten Sichtbereich überdecken.

Die Sensoren des Netzwerks 1 gemäß Figur 1 sind so angeordnet, dass deren Sichtbereiche 4, 4', 4" innerhalb eines Objektraumes 5, in welchem Objekte 6 zu detektieren sind, überlappen.

Die Sensoren 2, 2', 2" des Netzwerks 1 gemäß Figur 1 sind über einen Datenbus 7 an eine übergeordnete Einheit in Form einer Steuerung 8 angeschlossen. Der Datenbus 7 umfasst im vorliegenden Fall nicht dargestellte serielle Schnittstellen, über welche ein leistungsgebundener Datenaustausch der Teilnehmer des Netzwerks 1 erfolgt.

Mit jedem Sensor 2, 2', 2" werden in dem jeweiligen Sichtbereich 4, 4', 4" Objekte 6 erfasst. Je nachdem, ob der jeweilige Sensor 2, 2', 2" als Lichttaster oder Distanzsensor ausgebildet ist, erfolgt die Objekterfassung in Form einer bloßen Anwesenheitskontrolle oder als Bestimmung der aktuellen Objektdistanz. Die so von den einzelnen Sensoren 2, 2', 2" generierten Einzeldetektionsergebnisse werden über den Datenbus 7 übertragen und so den anderen Sensoren 2, 2', 2" zur Verfügung gestellt. In einem Sensor 2 wird aus dem Einzeldetektionsergebnis ein Gesamtdetektionsergebnis abgeleitet und an die Steuerung 8 übertragen. Im vorliegenden Fall wird hierbei der Umstand ausgenutzt, dass die Sichtbereiche 4, 4', 4" der Sensoren 2, 2', 2" überlappen, so dass ein Objekt 5 von mehreren Sensoren 2, 2', 2" gleichzeitig detektiert wird. Damit kann durch Verknüpfung der Einzeldetektionsergebnisse, insbesondere eine Mittelung der Einzeldetektionsergebnisse zur Generierung der Gesamtdetektionsergebnisse die Detektionssicherheit oder Positioniergenauigkeit eines Objekts 6 erhöht werden. Weiterhin können aus den Einzeldetektionsergebnissen auch komplexere Gesamtdetektionsergebnisse generiert werden. Beispielsweise kann aus den Einzeldetektionsergebnissen die räumliche Orientierung eines Objekts 6 als Gesamtdetektionsergebnis bestimmt werden.

Die Datenübertragung zwischen den Sensoren 2, 2', 2" des Netzwerks 1 erfolgt bevorzugt mit einer höheren Taktrate als der Takt, mit welcher der Sensor 2 das Gesamtdetektionsergebnis an die übergeordnete Steuerung 8 ausgibt.

Figur 2 zeigt ein weiteres Ausführungsbeispiel eines Netzwerks 1 mit über einen Datenbus 7 verbundenen Sensoren 2, 2', 2" und einer Steuerung 8. Das Netzwerk 1 gemäß Figur 2 unterscheidet sich von der Ausführungsform gemäß Figur 1 hinsichtlich der Orientierung der Sensoren 2, 2', 2". Die Sensoren 2, 2', 2" sind in diesem Fall so angeordnet, dass deren Sichtbereiche 4, 4', 4" nicht überlappen. Ein Objekt 6, das den Objektraum 5 in der mit dem Pfeil gekennzeichneten Richtung passiert, wird somit zuerst vom Sensor 2, dann vom Sensor 2' und schließlich vom Sensor 2" erfasst.

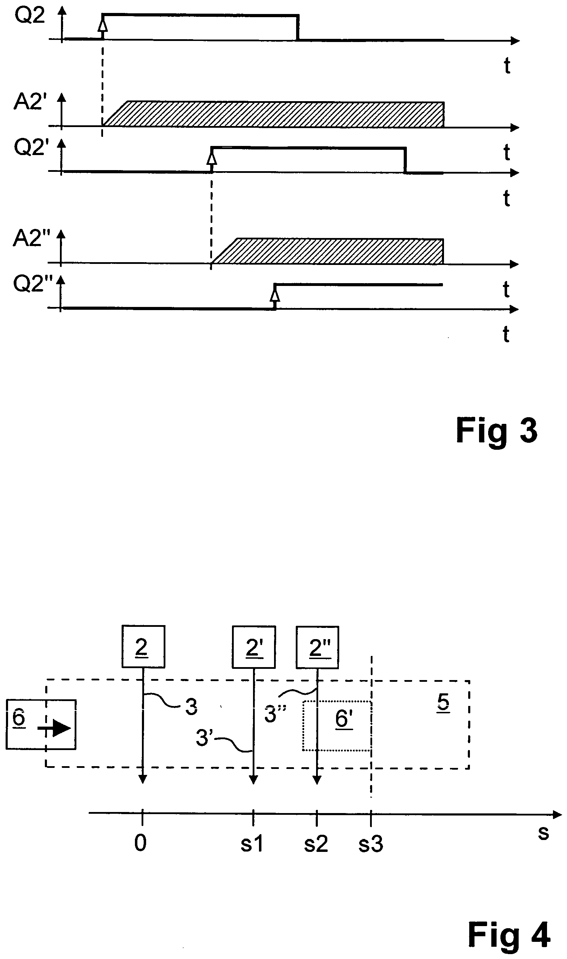

Figur 3 zeigt die hierfür erhaltenen Schaltsignale Q2, Q2', Q2" der Sensoren 2, 2', 2". Der Schaltzustand 0 eines solchen Schaltsignals entspricht seinem freien Objektraum 5, der Schaltzustand 1 einer Objektdetektion. Auch aus Figur 3 ist die zeitlich versetzte Objektdetektion ersichtlich.

Um einen besonders energiesparenden Betriebsmodus zu schaffen, werden die Sensoren 2, 2', 2" jeweils nur kurz bevor das Objekt in deren Sichtbereich 4, 4', 4" eindringt aktiviert. Dies ist ebenfalls in Figur 3 veranschaulicht. Sobald das Schaltsignal Q2 den Wert 1 einnimmt, d. h. der Sensor 2 das Objekt detektiert, generiert der Sensor 2 das Aktivierungssignal A2', mit dem der Sensor 2' aktiviert wird. Sobald der Sensor 2' das Objekt detektiert, generiert dieses das Aktivierungssignal A2" und aktiviert dadurch den Sensor 2". Jeweils nach Abfallen des Schaltsignals Q2, Q2' kann, wie in Figur 3 dargestellt, auch das Aktivierungssignal A2' bzw. A2" wieder abfallen, so dass der jeweilige Sensor 2', 2" wieder deaktiviert wird.

Bei der Anordnung gemäß Figur 3 können mit den Sensoren 2, 2', 2" lokal die einzelnen Objekte 6 erfasst werden, wobei daraus als Gesamtdetektionsergebnis Informationen über die Geschwindigkeiten, Größen der Objekte 6 und dergleichen abgeleitet werden können.

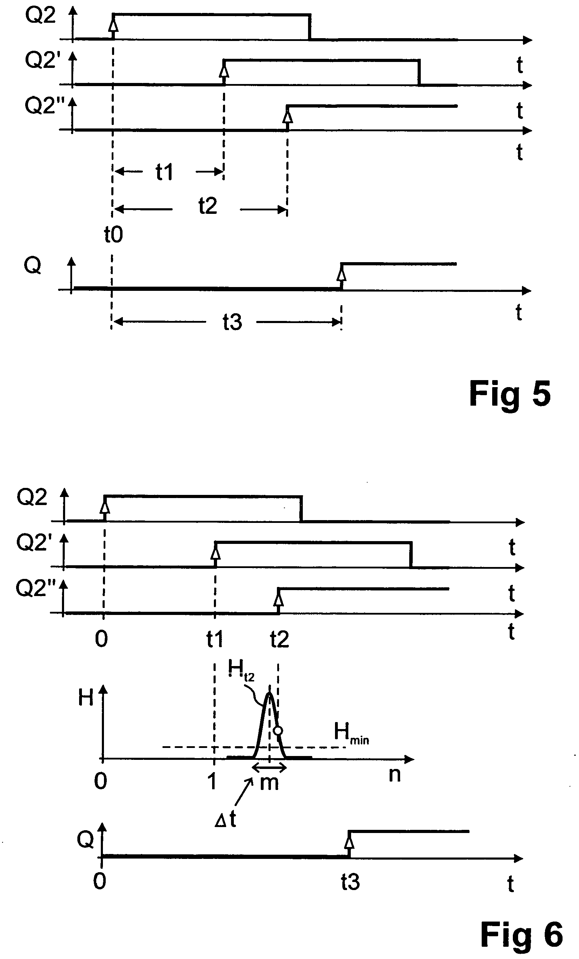

Figur 4 zeigt die Anordnung gemäß Figur 2 in veränderter Darstellung, wobei dort die Strahlachsen der Sendelichtstrahlen 3, 3', 3" der einzelnen Sensoren 2, 2', 2" dargestellt sind. Weiterhin ist in Figur 4 ein Wegmaßstab s dargestellt. Die Stahlachsen der Sendelichtstrahlen 3, 3', 3" liegen bei s = o, s1 und s2. Dementsprechend werden die in Figur 5 dargestellten Zeitdiagramme für die Schaltsignale Q2, Q2', Q2" der Sensoren 2, 2', 2" erhalten. Bei s = o unterbricht das Objekt 6 die Strahlenachse der Sendelichtstrahlen 3 des ersten Sensors 2, so dass dessen Schaltsignal bei t = t0 auf den Wert 1 wechselt, d. h. eine Objektdetektion meldet. Ausgehend von t0 wechseln die Schaltausgänge Q2' und Q2" um die Zeiten t1 bzw. t2 verzögert von 0 auf 1, wenn die Strahlachsen der Sendelichtstrahlen 3', 3" dieser Sensoren 2', 2" unterbrochen werden.

Als Gesamtdetektionsergebnis wird aus den die Einzeldetektionsergebnisse bildenden Schaltsignalen Q2, Q2', Q2" das Schaltsignal Q generiert. Dieses im Sensor 2" generierte Schaltsignal Q wird an die übergeordnete Steuerung zur Auslösung eines Steuerungsvorgangs ausgegeben.

Zur Berechnung des Zeitpunkts t = t0 + t3, bei welchem das Schaltsignal Q vom Wert 0 auf 1 wechselt, bestimmt sich aus den Einzeldetektionsergebnissen aller drei Sensoren 2, 2', 2" und wird gemäß folgender Beziehung berechnet.

$$t3 = 2 \cdot s3 \, / \, (s1 \, / \, t1 + s2 \, / \, t2)$$

Da zur Berechnung des Schaltpunktes des Schaltsignals Q sämtliche Sensoren 2, 2', 2" beitragen, wirken sich Messwertschwankungen einzelner Sensoren 2, 2', 2" auf den Messwert t3 nur zu einem Bruchteil aus, d. h. die Detektionssicherheit des Gesamtdetektionsergebnisses ist höher als die der Einzeldetektionsergebnisse.

Figur 6 zeigt eine Weiterbildung des in Figur 5 veranschaulichten Auswerteverfahrens für die Anordnung gemäß Figur 4.

Infolge von Schwankungen der Objektgeschwindigkeit, die idealer Weise im vorliegenden Fall einen konstanten Wert $v = v_0$ annehmen würde, schwanken auch die Ansprechzeiten $t = 0$, tl, t2 der Sensoren 2, 2', 2" bei der Detektion des Objekts 6.

Diese Schwankungen, die in einem Einlernvorgang messtechnisch erfasst werden, sind in dem normierten Diagramm H(n) in Figur 6 aufgetragen. Dabei bedeutet H die Häufigkeit der Zeit des Auftretens des Schaltpunkts Q2" des Sensors 2". Hierbei ist H in Abhängigkeit einer normierten Zeit n aufgetragen. Die Normierung erfolgt derart, dass bei jeder Messung die Geschwindigkeit v als Normierungsmaßstab verwendet wird, mittels dessen die Zeit $t = 0$ die normierte Zeit n = 0 und der Zeit t1 die normierte Zeit t2 = 1 zugewiesen wird. Entsprechend dieser Normierung führen Schwankungen der Objektgeschwindigkeiten v zu Schwankungen des Schaltpunktes Q2". Die Häufigkeitsverteilung dieses Schaltpunkts Q2" bildet die in Figur 6 dargestellte Verteilung H(n), die im Sensor 2" eingelernt wird. Mit dieser Verteilung wurden in der nachfolgenden Betriebsphase des Netzwerks die aktuell ermittelten Zeiten des Schaltpunkts von Q2" verglichen. Nur wenn der aktuelle Schaltpunkt innerhalb der ermittelten Verteilung H(n) liegt, wird das Messergebnis als gültig erkannt und im Sensor 2" der Schaltpunkt des Schaltsignals Q zum Zeitpunkt t3 generiert und an die Steuerung ausgegeben.

Die Ausführungsform gemäß Figur 6 stellt somit eine Erweiterung der Ausführungsform gemäß Figur 5 dahingehend dar, dass die Sensoren 2, 2', 2" des Netzwerks 1 ein selbstkennendes System bilden, welches selbst Gültigkeitskriterien für die generierten Messergebnisse generiert.

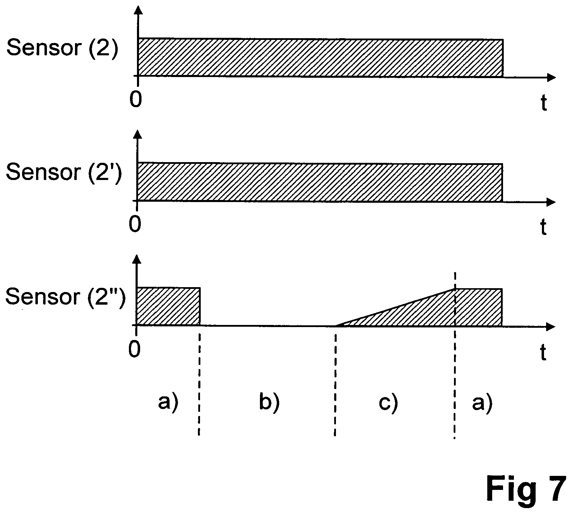

Figur 7 zeigt den zeitlichen Verlauf des Betriebsmodus der Anordnung gemäß Figur 4, bei welchem bei Ausfall eines Sensors 2, 2', 2" des Netzwerks 1 von den noch intakten Sensoren 2, 2', 2" kompensiert und aufgefangen wird.

In der Phase a) sind alle Einzelsensoren in Betrieb. Die Phase b) zeigt den Ausfall des Sensors 2", was dadurch erkannt wird, dass der Sensor 2 kein Schaltsignal innerhalb der Verteilung H(n) gemäß Figur 6 generiert. Handelt es sich dabei nicht um ein vollständiges Ausbleiben des Schaltsignals Q2", sondern nur um eine unzulässige Verschiebung eines Ansprechzeitpunktes, können weitere statistische Messwerte, wie z. B. die mittlere Bahngeschwindigkeit und/oder die mittlere Objektlänge, herangezogen werden um den fehlerhaften Sensor 2, 2', 2" zu ermitteln. Die beiden ordnungemäß arbeitenden Sensoren 2, 2', 2" übernehmen die Ermittlung des Gesamtdetektionsergebnisses und ersetzen so den ausgefallenen Sensor 2, 2', 2".

Generell kann der Zeitpunkt t3 des Schaltsignals Q bei Ausfall eines Sensors 2, 2', 2" durch die Signale der jeweils zwei verbleibenden Sensoren 2, 2', 2" erfolgen. Dies sind im Einzelnen:

Bei Ausfall des Sensors 2 :     $t3 = k \, (t2 - t1) / m$

Bei Ausfall des Sensors 2' :     $t3 = k \cdot t2$

Bei Ausfall des Sensors 2" :     $t3 = m \cdot k \cdot t1$

wobei $m = s2 / s1$, $k = s3 / s2$

Wird der fehlerhafte Sensor 2" durch einen neuen Sensor 2" ausgetauscht, beginnt die Phase c). Der neue Sensor 2" holt sich von den beiden noch intakten Sensoren 2, 2' die Betriebsparameter und übernimmt diese als Startparameter. Über eine gewisse Zeit optimiert er seine Betriebsparameter und vergleicht seine Detektionsergebnisse mit denen seiner Nachbarsensoren. Ist ein bestimmter Grad der Übereinstimmung erreicht, meldet er sich als voll funktionsfähig und wird nach einer Prüfung durch die Nachbarsensoren wieder zugelassen um das Gesamtergebnis mitzubestimmen. Durch dieses Vorgehen wird die Systemverfügbarkeit wesentlich erhöht und die Ausfallerkennung gewährleistet. Der Austausch kann zu einem geeigneten Servicezeitpunkt, z. B. zum Schichtwechsel, erfolgen und die Inbetriebnahme kann sich auf die mechanische Montage beschränken, da die Parametrierung und Funktionskontrolle mit Unterstützung der Nachbarsensoren erfolgt.

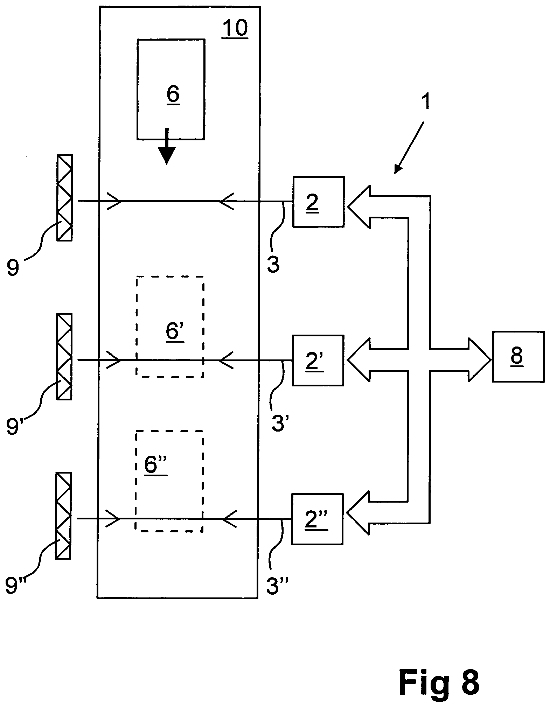

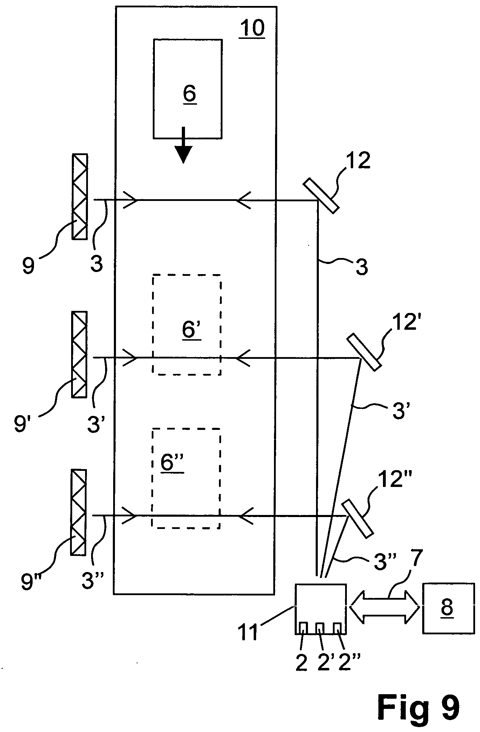

Figur 8 zeigt ein Ausführungsbeispiel eines Netzwerks 1 mit den Sensoren 2, 2', 2", die als Reflexionslichtschranken ausgebildet sind und deren Sendelichtstrahlen 3, 3', 3" jeweils gegen einen Reflektor 9, 9', 9" geführt sind. Mit diesen Sensoren 2, 2', 2" werden Objekte 6 erfasst, die auf einem Transportband 10 gefördert werden. Die Sensoren 2, 2', 2" und deren zugeordneten Reflektionen sind am gegenüberliegenden Seiten des Transportbands 10 angeordnet, so dass Objekte 6, 6', 6" wie in Figur 8 dargestellt, durch eine Unterbrechung des Strahlengangs der Sendelichtstrahlen 3, 3', 3"eines Sensors 2, 2', 2" zum zugeordneten Reflektor 9, 9', 9" detektierbar sind. Dabei verlaufen die Strahlachsen der Sendelichtstrahlen 3, 3', 3" senkrecht zur Längsachse des Transportbandes 10 und zur Förderrichtung der Objekte 6. Figur 9 zeigt eine Abwandlung der Ausführungsform gemäß Figur 8. Die Sensoren 2, 2', 2" sind im Unterschied zur Ausführungsform gemäß Figur 8 in seinem gemeinsamen Gehäuse 11 integriert. Die Sendelichtstrahlen 3, 3', 3" werden über einzelne Umlenkspiegel 12, 12', 12" auf die Reflektoren 9, 9', 9" geführt. Der Datenbus 7 sorgt wieder für den Anschluss der Sensoren 2, 2', 2"an die Steuerung 8. Als weiterer Bestandteil des Datenbusses 7 sind interne Prozessorbusse vorgesehen, welche die Auswerteeinheiten der in dem Gehäuse 11 integrierten Sensoren 2, 2', 2" verknüpfen. Ansonsten entspricht die Anordnung gemäß Figur 9 dem Ausführungsbeispiel gemäß Figur 8.

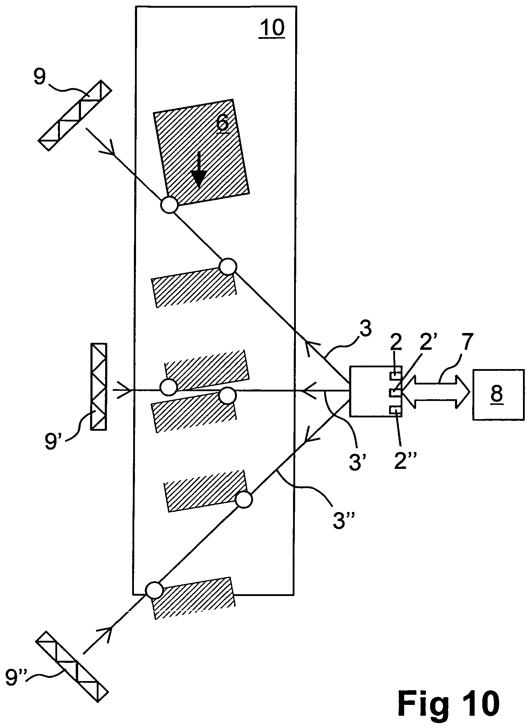

Figur 10 zeigt eine Abwandlung der Ausführungsform gemäß Figur 9. Bei dem Netzwerk 1 gemäß Figur 10 sind die Sensoren 2, 2', 2" wiederum in einem gemeinsamen Gehäuse 11 integriert. Jedoch werden die Sendelichtstrahlen 3, 3', 3" der Sensoren 2, 2', 2" direkt, d. h. ohne eine Umlenkung über Unlenkspiegel 12 ,12', 12", auf die zugeordneten Reflektoren 9, 9', 9" geführt. Wie aus Figur 10 ersichtlich, verlaufen die Strahlenachsen der Sendelichtstrahlen 3, 3', 3" jeweils in einem Winkel von 45° zueinander. Damit verlaufen nur die Sendelichtstrahlen 3' senkrecht zur Transportrichtung der Objekte 6, 6', 6", die Sendelichtstrahlen 3, 3" jedoch geneigt hierzu. Mit dieser Anordnung können insbesondere Informationszähler die zeitlichen Objektpositionen, die Objektbreiten, die Objektlängen und die Schräglagen von Objekten ermittelt werden.

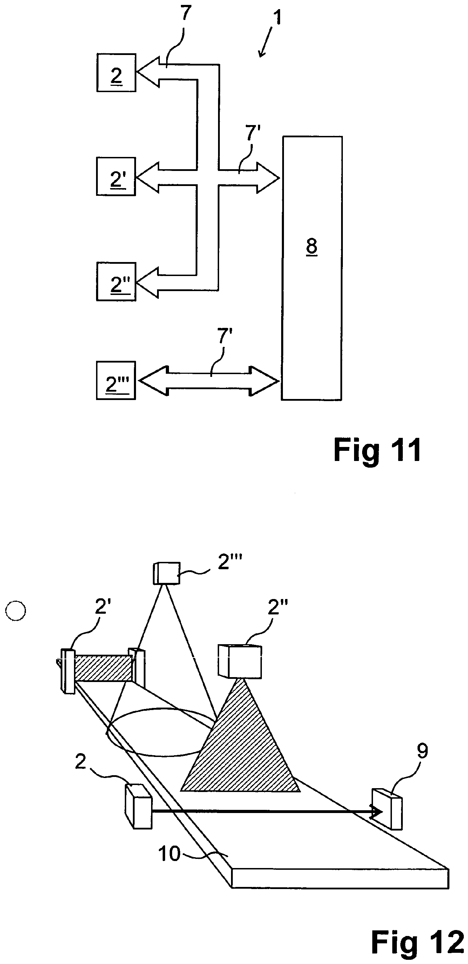

Figur 11 zeigt eine Konfiguration eines Netzwerks 1, bei welchem Sensoren 2, 2', 2" wiederum zur Ausbildung des Netzwerks 1 über den Datenbus 7 an eine übergeordnete Einheit in Form einer Steuerung 8 angeschlossen sind. Insofern entspricht die Anordnung dem Ausführungsbeispiel gemäß Figur 1. In Erweiterung hierzu ist ein weiterer Sensor 2'" direkt an die Steuerung angeschlossen, und kann über diese mit den Sensoren 2, 2', 2" kommunizieren. Die Funktionsweise des Netzwerks 1 ist bevorzugt derart, dass die Sensoren 2, 2', 2" als Komponenten des Netzwerks 1 Daten austauschen, so dass einer dieser Sensoren 2, 2', 2" das Gesamtergebnis bzw. Gesamtdetektionsergebnis generieren kann. Liegen beispielsweise abnormale Auswerteparameter in den Sensoren 2, 2', 2" vor, kann zusätzlich der Sensor 2'" zur Überprüfung der Parameter und zur Generierung des Gesamtergebnisses mit herangezogen werden.

Eine Realisierung der Konfiguration des Netzwerks 1 gemäß Figur 11 ist in Figur 12 dargestellt. Bei dieser Ausführungsform erfolgt eine Objektüberwachung an einem Transportband 10.

Der Sensor 2 stellt einen Reflexlichttaster dar, dessen Lichtstrahlen auf einen Reflektor 9 geführt sind. Sensor 2' ist ein Lichtgitter, bestehend aus mehreren Einheiten entsprechend dem Sensor 2, der eine Lichtschranke bildet. Der Sensor 2" ist ein Zeilensensor, d. h. ein Optosensor mit einem Sender und einer Empfangszeile. Die Sendelichtstrahlen 3", die vom Sender emittiert werden, sind aufgeweitet, bzw. werden gescannt. Als übergeordneter Sensor 2'" ist eine Kamera vorgesehen, die das Transportband 10 flächig von oben und über die ganze Breite erfasst. Jeder Einzelsensor bietet seine spezifischen Auswerteparameter an und verbessert, bzw. erweitert damit das Gesamtergebnis, das über ein binäres Schaltsignal hinaus weitere Messgrößen zum Objektfluss bereitstellt.

Bezugszeichenliste

| (1) | Netzwerk |
| (2, 2', 2", 2'") | Sensor |
| (3, 3', 3") | Sendelichtstrahlen |
| (4, 4', 4") | Sichtbereich |
| (5) | Objektraum |
| (6) | Objekt |
| (7) | Datenbus |
| (8) | Steuerung |
| (9) | Reflektor |
| (10) | Transportband |
| (11) | Gehäuse |
| (12, 12', 12") | Umlenkspiegel |

## Patentansprüche

1. Netzwerk (1) von über einen Datenbus (7) verbundenen Sensoren (2, 2', 2", 2'") zur Detektion von Objekten (6), wobei in den einzelnen Sensoren (2, 2', 2", 2'") generierte Daten über den Datenbus (6) an die weiteren Sensoren (2, 2', 2", 2'") übertragen werden, **dadurch gekennzeichnet, dass** in einem der Sensoren (2, 2', 2", 2'") aus den Daten der einzelnen Sensoren (2, 2', 2", 2'") ein Gesamtergebnis generiert wird, welches an eine übergeordnete Einheit ausgebbar ist.

2. Netzwerk nach Anspruch 1, **dadurch gekennzeichnet, dass** in den einzelnen Sensoren (2, 2', 2", 2'") Einzeldetektionsergebnisse generiert werden, aus welchen in einem Sensor (2, 2', 2", 2'") als Gesamtergebnis ein Gesamtdetektionsergebnis abgeleitet wird.

3. Netzwerk nach einem der Ansprüche 1 oder 2, **dadurch gekennzeichnet, dass** durch Übertragung von Daten einzelne Sensoren (2, 2', 2", 2'") aktivierbar und deaktivierbar sind.

4. Netzwerk nach Ansprüche 1 bis 3, **dadurch gekennzeichnet, dass** bei Ausfall wenigstens eines Sensors (2, 2', 2", 2'") dessen Funktion von wenigstens einem anderen Sensor (2, 2', 2", 2'") übernommen wird.

5. Netzwerk nach Ansprüche 1 bis 4, **dadurch gekennzeichnet, dass** in dieses ein neuer Sensor (2, 2', 2", 2'") integrierbar ist.

6. Netzwerk nach Anspruch 5, **dadurch gekennzeichnet, dass** der neue Sensor (2, 2', 2", 2'") einen ausgefallenen Sensor (2, 2', 2", 2'") ersetzt.

7. Netzwerk nach Anspruch 5, **dadurch gekennzeichnet, dass** zur Parametrierung des neuen Sensors (2, 2', 2", 2'") Daten der weiteren Sensoren (2, 2', 2", 2'") in diesen übertragbar sind.

8. Netzwerk nach Anspruch 5, **dadurch gekennzeichnet, dass** dieses durch den neuen Sensor (2,2', 2", 2'") erweitert ist.

9. Netzwerk nach Ansprüche 1 bis 8, **dadurch gekenn-**

**zeichnet, dass** dieses unterschiedliche Sensoren (2, 2', 2", 2''') aufweist.

10. Netzwerk nach Ansprüche 1 bis 9, **dadurch gekennzeichnet, dass** dieses optische Sensoren aufweist.

11. Netzwerk nach Ansprüche 1 bis 10, **dadurch gekennzeichnet, dass** die übergeordnete Einheit von einer Steuerung (8) gebildet ist.

12. Netzwerk nach Ansprüche 1 bis 11, **dadurch gekennzeichnet, dass** weitere Sensoren (2, 2', 2", 2''') direkt an die übergeordnete Einheit anschließbar sind.

13. Netzwerk nach Ansprüche 1 bis 12, **dadurch gekennzeichnet, dass** die Datenübertragung zwischen den einzelnen Sensoren (2, 2', 2", 2''') mit einer höheren Taktrate erfolgt, als die Taktrate, mit welcher das Gesamtergebnis an die übergeordnete Einheit übertragen wird.

14. Netzwerk nach Ansprüchen 1 bis 13, **dadurch gekennzeichnet, dass** die Datenübertragung über den Datenbus (7) leitungsgebunden erfolgt.

15. Netzwerk nach Ansprüche 1 bis 13, **dadurch gekennzeichnet, dass** die Datenübertragung über den Datenbus (7) berührungslos über Funksignale erfolgt.

**Claims**

1. A network (1) of sensors (2, 2', 2", 2''') connected via a data bus (7) for the detection of objects (6), wherein data generated in the individual sensors (2, 2', 2", 2''') are transmitted via the data bus (6) to the additional sensors (2, 2', 2", 2'''), **characterised in that** an overall result is generated in one of the sensors (2, 2', 2", 2''') based on the data of the individual sensors (2, 2', 2", 2'''), which overall result can be displayed to a higher-level unit.

2. A network according to claim 1, **characterised in that** individual detection results are generated in the individual sensors (2, 2', 2", 2''') from which a total detection result is derived in a sensor (2, 2', 2", 2''') as a total result.

3. A network according to one of Claims 1 or 2, **characterised in that** individual sensors (2, 2', 2", 2''') can be activated and deactivated by the transmission of data.

4. A network according to claims 1 to 3, **characterised in that** in case of failure of at least one sensor (2, 2', 2", 2'''), the function of the same is taken over by at least one other sensor (2, 2', 2", 2''').

5. A network according to claims 1 to 4, **characterised in that** a new sensor (2, 2', 2", 2''') can be integrated therein.

6. A network according to claim 5, **characterised in that** the new sensor (2, 2', 2", 2''') replaces a failed sensor (2, 2', 2", 2''').

7. A network according to claim 5, **characterised in that** data of the additional sensors (2, 2', 2", 2''') can be transferred therein for the parameterisation of the new sensor (2, 2', 2", 2''').

8. A network according to claim 5, **characterised in that** it is extended by the new sensor (2, 2', 2", 2''').

9. A network according to claims 1 to 8, **characterised in that** it has different sensors (2,2', 2", 2''').

10. A network according to claims 1 to 9, **characterised in that** it has optical sensors.

11. A network according to claims 1 to 10, **characterised in that** the higher-level unit is formed by a controller (8).

12. Network according to claims 1 to 11, **characterised in that** additional sensors (2, 2', 2", 2''') can be connected directly to the higher-level unit.

13. A network according to claims 1 to 12, **characterised in that** the data are transmitted between the individual sensors (2, 2', 2", 2''') at a higher clock rate than the clock rate at which the overall result is transmitted to the higher-level unit.

14. A network according to claims 1 to 13, **characterised in that** the data are transmitted via the data bus (7) and cables.

15. A network according to claims 1 to 13, **characterised in that** the data are transmitted via the data bus (7) in a contactless manner using radio signals.

**Revendications**

1. Réseau (1) de capteurs (2, 2', 2", 2''') connectés via un bus de données (7) pour la détection d'objets (6), les données générées dans les capteurs individuels (2, 2', 2", 2''') étant transmises via le bus de données (6) aux autres capteurs (2, 2', 2", 2'''), **caractérisé en ce qu'**un résultat global est généré dans l'un des capteurs (2, 2', 2", 2''') à partir des données des capteurs individuels (2, 2', 2", 2'''), lequel peut être transmis à une unité de niveau supérieur.

**2.** Réseau selon la revendication 1, **caractérisé en ce que** des résultats de détection individuels sont générés dans les capteurs individuels (2, 2', 2", 2'''), à partir desquels un résultat de détection global est dérivé en tant que résultat global dans un capteur (2, 2', 2", 2''').

**3.** Réseau selon l'une des revendications 1 ou 2, **caractérisé en ce que** des capteurs individuels (2, 2', 2", 2''') peuvent être activés et désactivés par transmission de données.

**4.** Réseau selon les revendications 1 à 3, **caractérisé en ce qu'**en cas de défaillance d'au moins un capteur (2, 2', 2", 2'''), sa fonction est assumée par au moins un autre capteur (2, 2', 2", 2''').

**5.** Réseau selon les revendications 1 à 4, **caractérisé en ce qu'**un nouveau capteur (2, 2', 2", 2''') peut y être intégré.

**6.** Réseau selon la revendication 5, **caractérisé en ce que** le nouveau capteur (2, 2', 2", 2''') remplace un capteur défaillant (2, 2', 2", 2''').

**7.** Réseau selon la revendication 5, **caractérisé en ce que**, pour le paramétrage du nouveau capteur (2, 2', 2", 2'''), des données des autres capteurs (2, 2', 2", 2''') peuvent y être transférées.

**8.** Réseau selon la revendication 5, **caractérisé en ce qu'**il est étendu par le nouveau capteur (2, 2', 2", 2''').

**9.** Réseau selon les revendications 1 à 8, **caractérisé en ce qu'**il présente différents capteurs (2, 2', 2", 2''').

**10.** Réseau selon les revendications 1 à 9, **caractérisé en ce qu'**il présente des capteurs optiques.

**11.** Réseau selon les revendications 1 à 10, **caractérisé en ce que** l'unité de niveau supérieur est formée par une commande (8).

**12.** Réseau selon les revendications 1 à 11, **caractérisé en ce que** d'autres capteurs (2, 2', 2", 2''') peuvent être connectés directement à l'unité de niveau supérieur.

**13.** Réseau selon les revendications 1 à 12, **caractérisé en ce que** la transmission de données entre les différents capteurs (2, 2', 2", 2''') a lieu à une fréquence d'horloge plus élevée que la fréquence d'horloge à laquelle le résultat global est transmis à l'unité de niveau supérieur.

**14.** Réseau selon les revendications 1 à 13, **caractérisé en ce que** la transmission de données via le bus de données (7) s'effectue par fil.

**15.** Réseau selon les revendications 1 à 13, **caractérisé en ce que** la transmission de données via le bus de données (7) s'effectue sans contact au moyen de signaux radio.

**Fig 1**

**Fig 2**

**Fig 3**

**Fig 4**

**Fig 5**

**Fig 6**

Fig 7

**Fig 8**

**Fig 9**

**Fig 10**

**Fig 11**

**Fig 12**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1398729 A1

- WO 03015452 A2

**In der Beschreibung aufgeführte Nicht-Patentliteratur**

- **DELIN K A et al.** The Sensor Web: A New Instrument Concept. *INTER-NET CITATION,* 20. Januar 2001, 1-9